# EUROPÄISCHE PATENTSCHRIFT

(11) **EP 2 782 477 B1**
(45) Veröffentlichungstag und Bekanntmachung des Hinweises auf die Patenterteilung: **06.05.2020**
(21) Anmeldenummer: 12813743.7
(22) Anmeldetag: 20.11.2012
(51) Int. Cl.: A46B 9/04, A61C 17/20

(54) **BÜRSTENKOPF FÜR EINE SCHALL- ODER ULTRASCHALLZAHNBÜRSTE UND ZAHNBÜRSTE**
BRUSH HEAD FOR A SONIC OR ULTRASONIC TOOTHBRUSH AND TOOTHBRUSH
TÊTE DE BROSSE POUR UNE BROSSE À DENTS SONIQUE OU ULTRASONIQUE ET BROSSE À DENTS

(30) Priorität: 21.11.2011 DE 102011055564
(43) Veröffentlichungstag der Anmeldung: 01.10.2014
(73) Patentinhaber: EMAG AG, 64546 Mörfelden-Walldorf (DE)
(72) Erfinder: GERLACH, Daniel, 35578 Wezlar (DE); EMEKCI, Bülent, 64546 Mörfelden-Walldorf (DE)
(74) Vertreter: Glück Kritzenberger Patentanwälte PartGmbB
(86) Internationale Anmeldenummer: PCT/DE2012/100352
(87) Internationale Veröffentlichungsnummer: WO 2013/075704

(56) Entgegenhaltungen:
- EP-A1- 0 247 224
- WO-A1-2010/069917
- DE-A1- 10 209 320
- DE-A1- 10 209 320
- DE-A1- 10 211 391
- DE-A1- 19 507 364
- DE-C1- 19 523 016

## Beschreibung

Die Erfindung betrifft einen Bürstenkopf für eine Schall- oder Ultraschallzahnbürste gemäß Oberbegriff Patentanspruch 1 sowie auf eine Ultraschallzahnbürste gemäß Oberbegriff Patentanspruch 11.

Bei der Reinigung einer fest installierten Zahnspange, etwa vom Typ Multiband- bzw. Multibracketapparatur, mittels elektrischer Zahnbürste kommt es immer wieder zu insuffizienter Putzleistung um die Basis des Brackets. Die mesiodistalen Bereiche unterhalb des Bogens sowie die seitlich der Bracketkanten "im Windschatten" der Bracketecken liegenden Zahnabschnitte werden auch bei intensiver Reinigung nicht vollkommen plaquefrei, da hier kein Kontakt der Borsten mit dem Bracket bzw. dem Zahn stattfindet. Dies ist bedingt durch die üblicherweise bei elektrischen Zahnbürsten stattfindende Drehbewegung des Bürstenkopfes sowie durch die Form des Bürstenkopfes (Länge und Ausrichtung der Borsten).

Beispielsweise beschreiben die DE102 09 320 A1 und die DE 102 11 391 A1 jeweils einen Zahnbürstenkopf für eine elektrische Zahnbürste. Bei beiden Zahnbürstenköpfen der DE102 09 320 A1 und der DE 102 11 391 A1 sind jeweils mehrere Borstenbüschel an einer als Borstenträger ausgebildeten Basisplatte angeordnet, wobei die Borstenbüschel in mehreren parallel und symmetrisch zu einer Mittelängsachse oder Mittelebene der Basisplatte ausgerichteten Reihen orientiert sind. In einer Querrichtung zur Mittellängsachse oder Mittelebene sind dabei wenigstens eine erste Reihe und an diese anschließend jeweils eine zweite Reihe, sowie daran anschließend jeweils eine dritte und vierte Reihe von Borstenbüscheln vorgesehen. In jeder Reihe sind die dortigen Borstenbüschel gleich lang, wobei die Borstenbüschel der wenigstens einen ersten und der dritten Reihen ebenfalls gleich lang sind und wobei die Borstenbüschel der zweiten Reihen länger sind als diejenigen der ersten und dritten Reihen. Die Borstenbüschel der dritten Reihen sind in Bezug auf die Mittellängsachse oder Mittelebene geneigt angeordnet und zwar von der Mittellängsachse oder Mittelebene weg geneigt. Bei dem Zahnbürstenkopf gemäß der DE102 09 320 A1 oder der DE 102 11 391 A1 ist jedoch nicht vorgesehen, dass die Borstenbüschel über einen Ultraschallgeber in Schwingung versetzt werden können.

Neben konventionellen elektrischen Zahnbürsten, bei denen entweder der gesamte Bürstenkopfträger hin- und herschwingt oder der Bürstenkopf oszilliert oder vibriert, sind seit einiger Zeit sogenannte Ultraschallzahnbürsten bekannt, bei denen ein in den Bürstenkopf integrierter Ultraschallgeber die üblicherweise zu Borstenbüscheln zusammengefassten biegsamen Borsten in hochfrequente Schwingungen versetzt. Der Vorteil derartiger Ultraschallzahnbürsten besteht neben der gründlichen Reinigung vor allem darin, dass Zähne und Zahnfleisch nur in geringem Maße mechanisch belastet werden ist. Es ist allerdings eine spezielle Ultraschallzahnpasta erforderlich. Außerdem muss der Putzvorgang gegenüber konventionellen elektrischen Zahnbürsten verändert werden, um eine optimale Reinigungswirkung zu erzielen: Bei Ultraschallzahnbürsten wird nämlich in der Regel empfohlen, die Ultraschallzahnpasta zunächst in ausgeschaltetem Zustand auf den Innen- und Außenflächen der Zähne zu verteilen. Dann wird die Zahnbürste eingeschaltet, und der Bürstenkopf wird jeweils fünf bis zehn Sekunden an die jeweilige Innen- bzw. Außenfläche gehalten, ohne dabei eine mechanische Hin- und Herbewegung des kompletten Bürstenkopfes vorzunehmen (d.h. kein "Schrubben" der Zähne).

Die weiter oben im Zusammenhang mit herkömmlichen elektrischen Zahnbürsten beschriebenen Zahnreinigungsprobleme bei Vorhandensein einer festen Zahnspange existieren in zwar abgeschwächter aber prinzipiell ähnlicher Weise auch bei Ultraschallzahnbürsten.

Aufgabe der Erfindung ist es, einen einfach aufgebauten und leicht herstellbaren Bürstenkopf für eine Schall- oder Ultraschallzahnbürste sowie eine Zahnbürste anzugeben, die speziell zur Reinigung einer Zahnspange vom Typ Multibandapparatur / Multibracketapparatur geeignet sind und die oben genannten Probleme vermeiden.

Zur Lösung dieser Aufgabe ist ein Bürstenkopf entsprechend dem Patentanspruch 1 ausgebildet. Eine Zahnbürste ist Gegenstand des Patentanspruchs 11.

Unter "Borstenlänge" ist im Folgenden die Länge des frei von der Außenseite der Basisplatte abstehenden Abschnittes der Borsten ohne Berücksichtigung eines sich in eine Basisplatte hinein erstreckenden und sich ggf. auf der Rückseite zum Ultraschallwandler hin fortsetzenden Wurzel- oder Fußabschnittes der Borsten zu verstehen. Falls bei einem geneigt zur Basisplatte angeordneten Borstenbüschel die Länge der dortigen Borsten geringfügig variiert, ist unter "Länge des Borstenbüschels" die mittlere Borstenlänge der Borsten dieses Büschels zu verstehen. Die Borstenbüschel bilden zusammen eine Borstenbüschelanordnung.

Die erfindungsgemäße Ausgestaltung bietet u.a. den Vorteil, dass sich der Bürstenkopf bzw. dessen Borstenbüschelanordnung aufgrund der reduzierten Höhe der inneren Borstenbüschelreihe(n) gut über einen Drahtbogen und über die Brackets einer fest installierten Zahnspange stülpen kann. Die kürzeren inneren Borstenbüschel reinigen den Drahtbogen und die Bereiche auf den Brackets. Durch die problemlos die Zahnfläche erreichenden äußeren, längeren Borstenbüschel erfolgt eine Reinigung rund um die Bracketbasis.

Im Folgenden wird vorausgesetzt, dass der Ultraschallzahnbürstenkopf und/oder die Borstenbüschelanordnung - zumindest was die Borstenkonfiguration und die äußere Formgebung der die Borsten tragenden Basisplatte betrifft - insgesamt spiegelsymmetrisch zu einer eine Mittelängsachse der Basisplatte enthaltenden Mittel- oder Längsschnittebene aufgebaut ist. Es reicht daher, jeweils nur eine der beiden Hälften des Ultraschallzahnbürstenkopf zu betrachten. Konsequenterweise werden die Reihen der Borstenbüschel von der Mittellängsachse oder von der diese Achse enthaltenden Mittelebene ausgehend mit ein, zwei, drei etc. durchnummeriert. Bei Betrachtung des Ultraschallzahnbürstenkopf insgesamt kann man natürlich auch von einer inneren, mittleren oder äußeren Reihe sprechen.

Anstelle von jeweils einer ersten Reihe je Bürstenkopfhälfte, sprich insgesamt zwei durch einen Abstand voneinander getrennten inneren Reihen, könnte insgesamt nur eine einzige innere Reihe von Borstenbüscheln vorgesehen sein, die quer zur Längserstreckung der Reihe jeweils zur Hälfte einer der beiden Bürstenkopfhälften zuzuordnen sind. Eine derartige Ausführung ist ebenfalls Gegenstand der Erfindung und wird vom Anspruchswortlaut mit umfasst.

Bei der Erfindung ist es zweckmäßig, wenn die Borstenbüschel der ersten Reihe senkrecht auf der Basisplatte stehen. Die freien Enden der Borsten der zur ersten Reihe gehörigen Borstenbüschel liegen in einer gemeinsamen oder im Wesentlichen in einer gemeinsamen, parallel zur Basisplatte ausgerichteten Ebene.

Erfindungsgemäß sind die Borstenbüschel der zweiten Reihe nach innen, d.h. zur Mittelebene hin geneigt, und zwar u.a. mit dem Vorteil, dass die geneigten, längeren Borsten der die innere(n) Reihe(n) mit den kürzeren Borsten flankierenden bzw. säumenden zweiten Reihen in die Ecken unmittelbar um die Bracketbasis und in den Bereich unterhalb des Drahtbogens greifen und die dort befindliche Zahnoberfläche infolge ihres direkten Kontaktes reinigen, wenn der Bürstenkopf über den Drahtbogen und die Brackets einer fest auf den Zähnen montierten Zahnspange gestülpt wird.

Erfindungsgemäß ist außerhalb der zweiten Reihe eine dritte Reihe von Borstenbüscheln vorgesehen, die senkrecht zur Bezugsebene des Basiskörpers oder der Basisplatte stehen, wobei die Borstenbüschel der zweiten und dritten Reihen gleich lang sind. Somit weisen die Borstenbüschel der dritten Reihe die gleiche oder im Wesentlichen die gleiche Höhe über der Basisplatte auf wie die Borstenbüschel der zweiten Reihe, so dass die Enden der Borstenbüschel der zweiten und der dritten Reihen - wenn man von einer eventuellen "Mikrostrukturierung" bzw. Längendifferenzierung innerhalb der einzelnen Borstenbüschel absieht - innerhalb einer gemeinsamen, parallel zur Basisplatte oder zur Bezugsebene ausgerichteten Ebene liegen.

Zur Erreichung des genannten Zwecks hat es sich als günstig herausgestellt, wenn der Neigungswinkel der Borstenbüschel der zweiten Reihe gegenüber der Basisplatte oder einer senkrecht zu den Borstenbüscheln der ersten Reihe(n) orientierten Bezugsebene im Bereich zwischen 65° und 85°, vorzugsweise im Bereich zwischen 70° und 75° liegt, besonders bevorzugt etwa 73° beträgt.

Generell ist es auch von Vorteil, wenn die freien Borstenenden der schräg gestellten, d.h. geneigten Borstenbüschel derart angeschnitten sind, dass sie in einer gemeinsamen, parallel zur Basisplatte ausgerichteten Ebene liegen, so dass die oben erwähnte "Mikrostrukturierung" nicht vorhanden ist.

Vorteilhafterweise weist jede der Reihen sechs bis acht, vorzugsweise sieben Borstenbüschel auf. Es kann auch vorteilhaft sein, wenn die äußeren Reihen beispielsweise ein oder zwei Borstenbüschel mehr oder weniger besitzen als die inneren Reihen. Der Abstand zwischen zwei Borstenbüscheln einer Reihe, d.h. in Längsrichtung gesehen, liegt vorzugsweise im Bereich von 2,5 mm bis 4,0 mm und vorzugsweise bei rund 3,5 mm.

Der Abstand zwischen benachbarten Reihen, d.h. in Querrichtung gesehen, liegt vorzugsweise jeweils im Bereich von 2,0mm bis 3,0mm und vorzugsweise bei 2,5mm.

Die Borstenbüschel der ersten, inneren Reihe(n) weisen bevorzugt eine Länge im Bereich von 3mm bis 5mm, besonders bevorzugt 4mm auf, was bei senkrechter Ausrichtung mit deren Höhe über der Basisplatte übereinstimmt.

Die Borstenbüschel der zweiten, d.h. mittleren oder äußeren Reihe(n) weisen bevorzugt eine Länge im Bereich von 6mm bis 10mm, besonders bevorzugt 7mm bis 9mm auf, was bei senkrechter Ausrichtung mit deren Höhe über der Basisplatte übereinstimmt, und was bei geneigter Ausrichtung einer entsprechend verringerten Höhe (Länge mal Sinus des Neigungswinkels) entspricht. Beispielsweise würde ein 7mm langes Borstenbüschel bei einem Neigungswinkel von 73° eine Höhe von rund 6,7mm aufweisen.

Das Verhältnis der Länge der kürzen, inneren Borstenbüschel zur Länge der längeren, mittleren oder äußeren Borstenbüschel liegt demnach bevorzugt im Bereich 0,3 bis 0,8 und besonders bevorzugt bei rund 0,5 bis 0,6. Die Borstenbüschel der dritten, d.h. äußeren Reihe sind bezüglich ihrer Länge in der oben beschriebenen Weise auf die Borstenbüschel der zweiten Reihe abgestimmt.

Die genannten Längen sind derart gewählt, dass einerseits die verkürzten inneren Borstenbüschel sicher dicht genug an die Spangenelemente heran kommen, und dass andererseits bei den längeren äußeren Borstenbüscheln bei guter Übertragung des Ultraschalls ein Ineinandergreifen der Borsten vermieden wird. Ein Ineinandergreifen der Borsten würde dazu führen, dass die Borsten nicht mehr geradlinig auf die Spangenelemente oder den Zahn wirken, sondern den Ultraschall in undefinierten Winkeln abstrahlen, was unerwünscht ist.

Die Borsten des Bürstenkopfes und/oder die Basisplatte können beispielsweise aus Kunststoff bestehen. Als eletro-mechanischer Wandler oder Ultraschallgeber kann ein Piezoelement verwendet werden, das Schwingungen in einem Frequenzintervall von beispielsweise 300Hz bis wenigstens 30KHz erzeugen kann. Die Borsten sind vorzugweise derart beschaffen und an den Ultraschallgeber angekoppelt, dass ihre freien Enden axial und/oder in seitlicher (lateraler) Richtung durch den Ultraschallgeber ausgelenkt werden.

Der Bürstenkopf kann in herkömmlicher Weise an einem Bürstenkopfträger angebracht oder angeformt sein. Der Bürstenkopfträger kann beispielsweise als Aufsteckteil für ein Griffteil konzipiert sein, welches in bekannter Weise wiederaufladbare Akkumulatoren oder dergleichen zur Bereitstellung der Betriebsspannung für den Ultraschallgeber sowie entsprechende Bedienelemente wie Taster oder Schalter sowie gegebenenfalls weitere elektronische Komponenten aufnimmt. Demgemäß kann zwischen dem Bürstenkopfträger und dem Griffteil eine elektrische und mechanische Kupplung vorgesehen sein.

Der Ausdruck "im Wesentlichen" bzw. "etwa" bedeutet im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an Ausführungsbeispielen näher erläutert. Es zeigen:

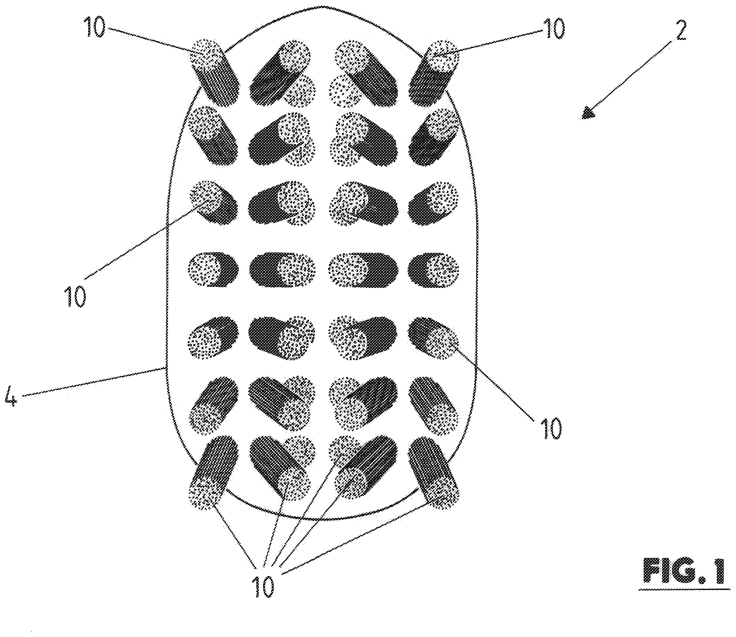

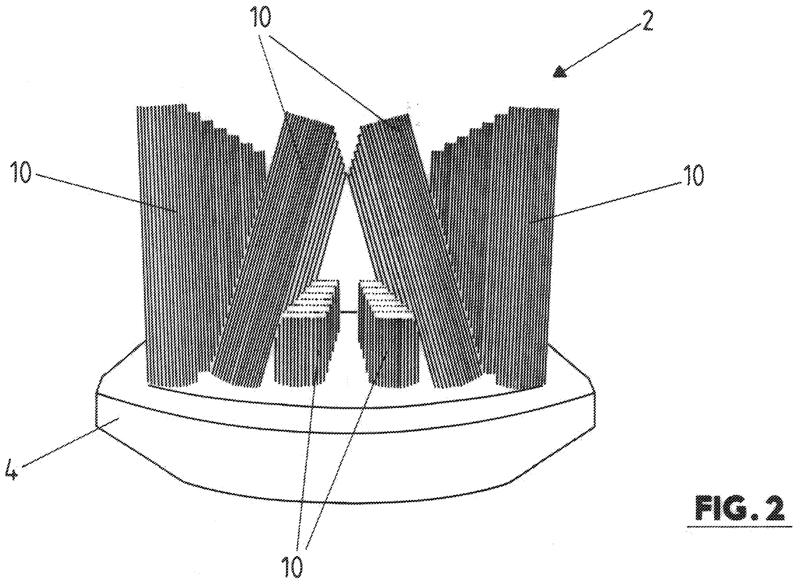

- Fig. 1 und 2: einen Bürstenkopf gemäß der Erfindung in unterschiedlichen perspektivischen Ansichten;

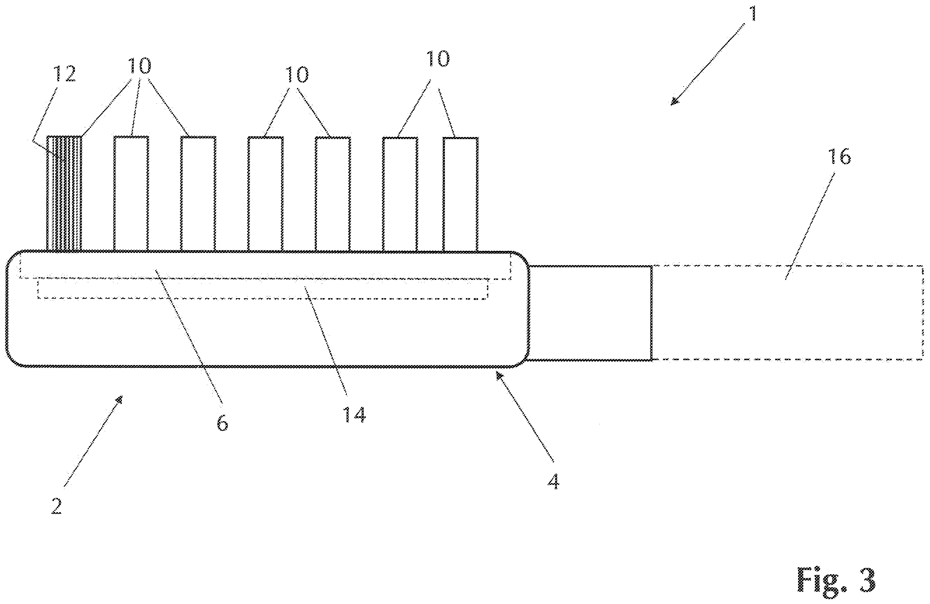

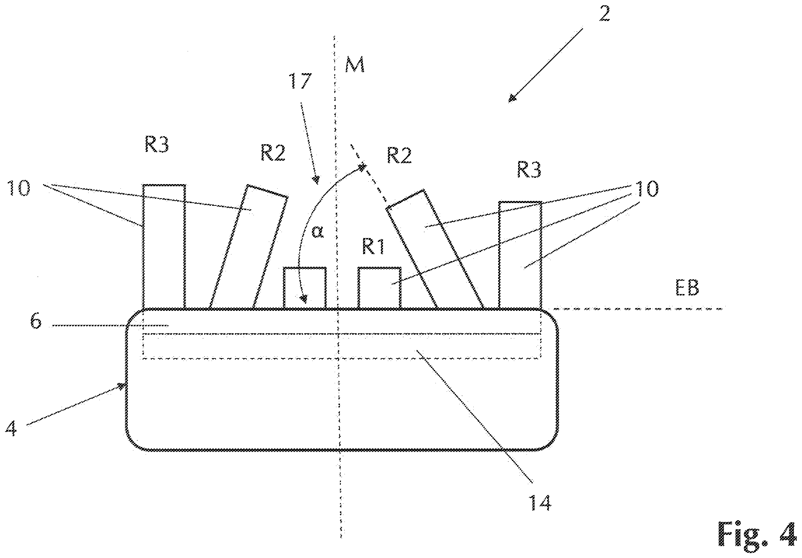

- Fig. 3 und 4: den Bürstenkopf der Figuren 1 und 2 in schematischer Seiten- und Stirnansicht;

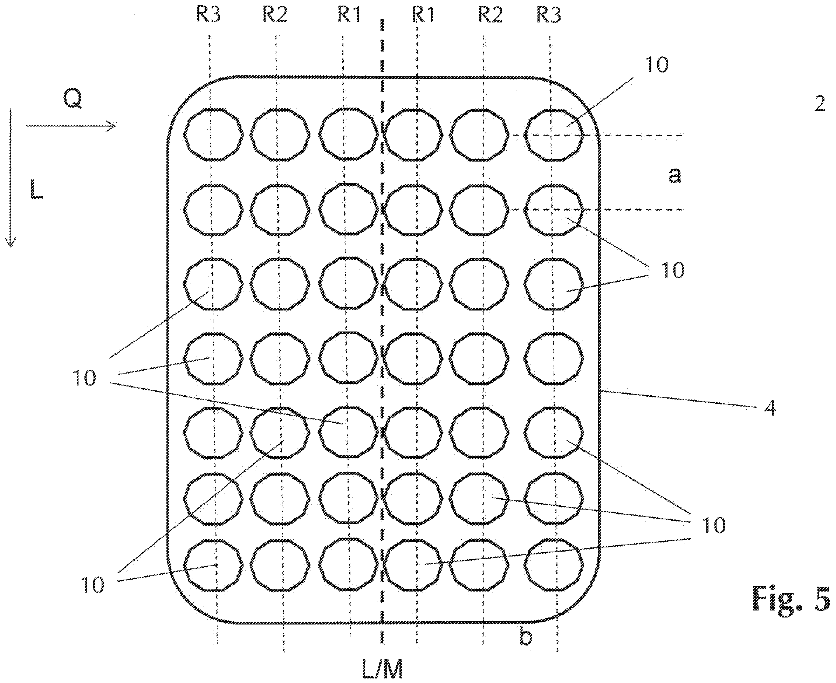

- Fig. 5: in schematischer Darstellung eine Draufsicht auf die Oberseite bzw. die Beborstung des Bürstenkopfes der Figuren 1 und 2;

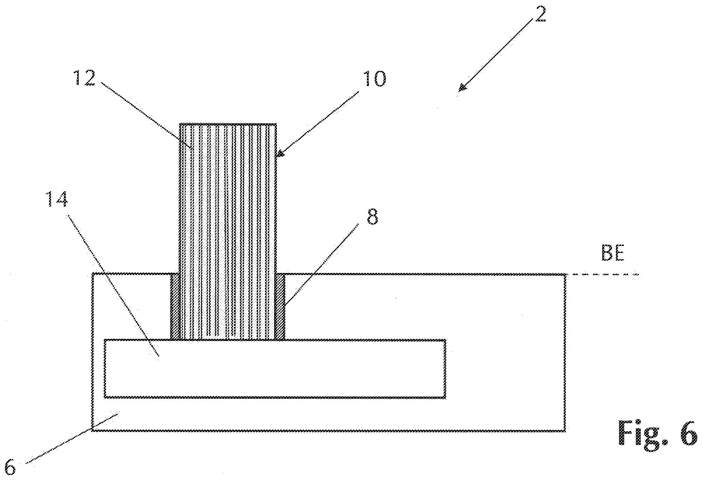

- Fig. 6: in einer vergrößerten Schnittdarstellung den Basiskörper des Bürstenkopfes der Figuren 1 und 2 im Bereich eines Borstenbündels.

Der in den Figuren in einer bevorzugten Ausführungsform dargestellte Bürstenkopf 2 einer Ultrazahnbürste 1 weist einen aus einem Kunststoff gefertigten Basiskörper 4 von überwiegend quaderförmiger Gestalt mit abgerundeten Ecken- und Kantenregionen auf. An einer Seite, die bei der Darstellung der Figuren die Oberseite des Basiskörpers 4 ist, ist der Basiskörper 4 mit einer überwiegend rechteckförmigen, länglichen und auf ihrer Oberseite flachen Basisplatte 6 mit abgerundeten Ecken ausgebildet. An einer der beiden Stirnseiten setzt sich der Bürstenkopf 2 in einem angeformten oder mit ihm verbundenen Bürstenkopfträger oder Griffelement 7 oder dergleichen in seiner Längsrichtung oder Mittellängsachse L fort. Die Oberseite der Basisplatte 6 liegt in einer Bezugsebene EB.

In die Basisplatte 6 ist ein regelmäßiges Gitter oder Array von im Wesentlichen kreisrunden Aufnahmeöffnungen 8 eingelassen, in denen jeweils ein Borstenbüschel 10 aus einer Vielzahl von biegsamen und flexiblen Borsten 12, beispielsweise Kunststoffborsten, aufgenommen und verankert ist. Im Inneren des Basiskörpers 4, auf der Rück- bzw. Unterseite der Basisplatte 6 befindet sich ein flacher, in den Figuren lediglich schematisch angedeutet Ultraschallgeber 14, der auch als elektromechanischer Ultraschallwandler bezeichnet werden kann und der die Borsten 12 der Borstenbüschel 10 beim Betrieb zu Schwingungen mit Schwingungsfrequenzen oberhalb von 300 Hz und bis zu 1.6 Mio. Schwingungen pro Minute oder 30KHz und mehr anregt. Als Ultraschallgeber 14 kann beispielsweise ein ferroelektrischer Schallwandler oder ein Piezoaktor verwendet werden. Die technischen Details sind dem Fachmann bekannt und bedürfen hier keiner näheren Erläuterung.

Der Bürstenkopf 2 ist hinsichtlich seiner von den Borstenbüscheln 10 gebildeten Beborstung spezifisch auf die Reinigungsbedürfnisse bei einer fest installierten Zahnspange, insbesondere vom Typ Multibandapparatur bzw. Multibracketapparatur abgestimmt. Der Bürstenkopf 2 ist dazu symmetrisch zu einer die Mittellängsachse L der Basisplatte 6 enthaltenden Mittel- oder Längsschnittebene M aufgebaut. Die Beborstung bzw. das Borstenbüschelfeld setzt sich aus mehreren, d.h. bei der dargestellten Ausführungsform sechs im Wesentlichen parallel zur Längsrichtung L verlaufenden Reihen R1 - R3 von Borstenbüscheln 10 zusammen. Jede Reihe R1 - R3 weist sieben jeweils im gleichen Längsabstand a = 3,5mm zueinander angeordnete Borstenbüschel 10 auf. Der Abstand b = 2,5mm zwischen zwei benachbarten Reihen R1 - R3 in einer Querrichtung Q, d.h. in einer Achsrichtung senkrecht oder im Wesentlichen senkrecht zur Mittelebene M ist ebenfalls für alle Reihen R1 - R3 gleich groß. Die Borstenbüschel 10 fluchten zudem zeilenweise in Querrichtung Q, so dass insgesamt ein regelmäßiges Rechteckgitter von sechs mal sieben Borstenbüscheln 10 verwirklicht ist. Die von der Mittelebene M in Querrichtung Q gesehen jeweils erste, d.h. innere Reihe R1 weist senkrecht auf der Basisplatte 6 bzw. die Bezugsebene EB stehende Borstenbüschel 10 mit einer Länge bzw. Höhe von rund 4 mm auf. Die freien Borstenenden der Borsten 12 sind zweckmäßigerweise abgerundet, um eine Verletzung des empfindlichen Zahnfleisches auszuschließen.

Die zweite nach Außen hin folgende Reihe R2 hingegen weist nach innen, zu der Mittelebene M hin geneigte Borsten 12 bzw. Borstenbüschel 10 mit einer Länge von rund 7 mm auf. Die Borsten 12 bzw. Borstenbüschel 10 weisen an ihren freien Enden einen kleineren Abstand von der Mittelebene M auf als im Bereich der Basisplatte 6. Der entsprechende Neigungswinkel α zwischen der Längserstreckung der Borsten 12 bzw. Borstenbüschel 10 und der senkrecht zur Mittelachse orientierten Bezugsebene BE an die Oberseite des Bürstenkörpers 4 oder Basisplatte 6 beträgt ca. 73°. Abweichend von der zeichnerischen Darstellung in den Figuren können die schräg gestellten der zweiten Reihe R2 so angeschnitten sein, dass ihre freien Enden in einer gemeinsamen Ebene liegen.

Zusätzlich ist außen liegend eine dritte Reihe R3 von Borstenbüscheln 10 vorgesehen, die bzw. deren Borsten 12 senkrecht oder im Wesentlichen senkrecht auf der Basisplatte 6 bzw. die Bezugsebene EB stehen. Die Borstenlänge ist vorzugsweise jeweils so gewählt, dass die freien Enden der Borsten 12 der dritten Reihe R3 und die freien Enden der entsprechend angeschnittenen Borsten 12 der zweiten Reihe R2 in einer gemeinsamen Ebene liegen. Die Borstenlänge der Borsten 12 der Borstenbüschel 10 der dritten Reihe beträgt dann etwas weniger als 7mm.

Abweichend besteht auch die Möglichkeit, dass die Borstenbüschel 10 der dritten Reihe R3 ebenfalls gegenüber der Basisplatte 6 öder der Bezugsebene EB nach innen mit dem Winkel α geneigt sind, beispielsweise im Winkel von 73°, so dass die Borsten 12 bzw. Borstenbüschel 10 dann ebenfalls an ihren freien Enden einen kleineren Abstand von der Mittelebene M aufweisen als im Bereich der Basisplatte 6. Entsprechend der spiegelsymmetrischen Ausbildung des Borstenfeld sind die drei Reihen R1 - R3 beidseitig der Mittelebene M vorgesehen, so dass insgesamt das Bostenfeld oder die Beborstung mit sechs mal sieben Borstenbüscheln 10 verwirklicht ist.

Bei einer weiteren Ausführungsform ist anstelle der beiden beidseitig von der Mittelebene M und symmetrisch zu dieser angeordneten inneren Reihen R1 von relativ kurzen Borstenbüscheln 10 nur eine einzige derartige Reihe R1 vorgesehen, deren Borstenbüschel 10 entlang der Mittellängsachse L oder der Mittelebene M angeordnet sind. Demzufolge ist bei dieser Ausführungsform beispielsweise ein Borstenfeld mit insgesamt fünf mal sieben Borstenbüscheln 10 verwirklicht.

Weiterhin können in Richtung der Mittellängsachse L auch weniger oder mehr als sieben Borstenbüschel 10 je Reihe R1 - R3 vorgesehen sein. Bei einem für manche Anwendungen wünschenswerten kurzen Bürstenkopf 2 mögen beispielsweise vier oder fünf Borstenbüschel 10 je Reihe R1 - R3 ausreichend sein. Ferner ist es auch denkbar, einen besonders breiten Bürstenkopf 2 mit einer vierten oder fünften Reihe von Borstenbüscheln 10 zu verwirklichen. Schließlich ist es möglich, dass einige der Reihen, insbesondere die äußeren Reihen, nicht exakt parallel zu der Mittellängsachse L oder Mittelebene M ausgerichtet sind, sondern leicht schräg verlaufen. Für besondere Zwecke kann auch eine unsymmetrische Ausführung erwogen werden.

Der erfindungsgemäße Bürstenkopf 2, der beispielsweise abnehmbar an einem Handstück 16 vorgesehen ist, wird im Prinzip wie die bekannten Bürstenköpfe von Ultraschallzahnbürsten angewendet, und zwar wie folgt:
- Ultraschallzahncreme leicht über die Zahninnenseiten und Außenseiten verteilen,
- die Borsten 12 dann von innen und anschließend von außen bei eingeschaltetem Ultraschallgeber 14 oder Handstück 16 an die Zähne halten, und zwar ohne Bewegungen fünf bis zehn Sekunden verweilen und
- dann den Behandlungsort wechseln, d.h. die Borsten 12 an die nächsten Zähne halten.

Der erfindungsgemäße Borstenkopf 2stülpt sich infolge der "Lücke 17" im Borstenfeld über den Drahtbogen und die Brackets der fest installierten Zahnspange. Es erfolgt durch die äußeren, längeren und ggf. auch angewinkelten Borstenbüschel 10 eine Reinigung unter dem Drahtbogen und rund um die Bracketbasis. Die kürzeren inneren Borstenbüschel 10 reinigen den Drahtbogen und die Flächen auf den Brackets. Der erfindungsgemäße Bürstenkopf 2 sorgt damit insgesamt für eine ideale Reinigung des hygienekritischen Bracketumfeldes

### Bezugszeichenliste

- 1: Schall- oder Ultraschallzahnbürste
- 2: Bürstenkopf
- 4: Basiskörper
- 6: Basisplatte
- 8: Aufnahmeöffnung
- 10: Borstenbüschel
- 12: Borsten
- 14: Ultraschallgeber
- 16: Handstück
- 17: Lücke

- L: Längsrichtung
- M: Mittelebene
- R1, R2, R3: Reihe
- Q: Querrichtung
- EB: Bezugsebene
- a: Längsabstand
- b: Querabstand
- α: Neigungswinkel

## Patentansprüche

1. Bürstenkopf für eine Schall- oder Ultraschallzahnbürste mit einem Ultraschallgeber (14) und mit einer Mehrzahl von Borstenbüscheln (10), die an einem eine Bezugsebene (EB) bildenden Basiskörper oder an einer Basisplatte (6) angeordnet sind und beim Betrieb durch den Ultraschallgeber (14) in Schwingungen versetzt werden, wobei die Borstenbüschel (10) in mehreren parallel und symmetrisch zu einer Mittellängsachse oder Mittelebene (M) der Basisplatte (6) ausgerichteten Reihen (R1 - R3) angeordnet sind, wobei in einer Querrichtung (Q) zur Mittellängsachse oder Mittelebene (M) wenigstens eine erste Reihe (R1) und an diese anschließend jeweils mindestens eine zweite Reihe (R2) vorgesehen sind, wobei in jeder Reihe die dortigen Borstenbüschel (10) gleich lang sind, wobei die Borstenbüschel (10) der zweiten Reihen (R2) länger sind als die Borstenbüschel (10) der wenigstens einen ersten Reihe (R1), wobei die Borstenbüschel (10) der zweiten Reihe (R2) zur Mittellängsachse oder Mittelebene (M) hin geneigt sind, wobei außerhalb der zweiten Reihe (R2) wenigstens eine dritte Reihe (R3) von Borstenbüscheln (10) vorgesehen ist, wobei die Borstenbüschel (10) der wenigstens einen dritten Reihe (R3) senkrecht zur Bezugsebene (EB) des Basiskörpers oder Basisplatte (6) stehen und wobei die Borstenbüschel (10) der zweiten und dritten Reihe (R2, R3) gleich lang sind.

2. Bürstenkopf nach Anspruch 1, **dadurch gekennzeichnet, dass** die Borstenbüschel (10) der wenigstens einen ersten Reihe (R1) senkrecht auf die Bezugsebene (EB) des Basiskörpers oder der Basisplatte (6) stehen.

3. Bürstenkopf nach Anspruch 1 oder 2, **dadurch gekennzeichnet, dass** beidseitig der Mittellängsachse oder Mittelebene (M) jeweils wenigstens eine zweite und eine dritte Reihe (R2, R3) von Borstenbüscheln (10) vorgesehen ist.

4. Bürstenkopf nach Anspruch 1 bis 3 , **dadurch gekennzeichnet, dass** der Neigungswinkel (α) der Borstenbüschel (10) der zweiten Reihe (R2) gegenüber der Bezugsebene des Basiskörpers oder der Basisplatte (6) im Bereich zwischen 65° und 85°, insbesondere zwischen 70° und 75°, und besonders bevorzugt bei 73° liegt.

5. Bürstenkopf nach einem der vorhergehenden Ansprüche, **dadurch gekennzeichnet, dass** die Borstenbüschel (10) der dritten Reihe (R3) im Wesentlichen die gleiche Höhe über dem Basiskörper oder der Basisplatte (6) aufweisen wie die Borstenbüschel (10) der zweiten Reihe (R2).

6. Bürstenkopf nach einem der vorhergehenden Ansprüche, **dadurch gekennzeichnet, dass** die freien Borstenenden der schräg gestellten oder geneigten Borstenbüschel (10) derart angeschnitten sind, dass sie in einer gemeinsamen Ebene liegen.

7. Bürstenkopf nach einem der vorhergehenden Ansprüche, **dadurch gekennzeichnet, dass** jede der Reihen (R1, R2, R3) sechs bis acht, vorzugsweise sieben Borstenbüschel (10) aufweist.

8. Bürstenkopf nach einem der vorhergehenden Ansprüche, **dadurch gekennzeichnet, dass** die Borstenbüschel (10) der ersten Reihe (R1) eine Länge im Bereich von 3mm bis 5mm, vorzugsweise 4 mm aufweisen.

9. Bürstenkopf nach einem der vorhergehenden Ansprüche, **dadurch gekennzeichnet, dass** die Borstenbüschel (10) der zweiten Reihe (R2) eine Länge im Bereich von 6mm bis 10mm, vorzugsweise 7mm bis 9mm aufweisen.

10. Bürstenkopf nach einem der vorhergehenden Ansprüche, **dadurch gekennzeichnet, dass** der Abstand zwischen benachbarten Reihen in Querrichtung (Q) gesehen jeweils im Bereich von 2mm bis 3 mm liegt und vorzugsweise jeweils 2,5 mm beträgt.

11. Zahnbürste mit einem Bürstenkopf (2) nach einem der vorhergehenden Ansprüche.

## Claims

1. Brush head for a sonic or ultrasonic toothbrush having an ultrasonic generator (14) and a plurality of bristle tufts (10), which are arranged on a base body or on a base plate (6) which forms a reference plane (EB), and which are caused to oscillate by the ultrasonic generator (14) during operation, wherein the bristle tufts (10) are arranged in a plurality of rows (R1 - R3) that are aligned parallel to and symmetrically about a central longitudinal axis or midplane (M) of the base plate (6), wherein in a transverse direction (Q) to the central longitudinal axis or midplane (M) at least a first row (R1) and adjacent thereto at least a second row (R2) are provided, wherein the bristle tufts (10) in each row are of the same length, wherein the bristle tufts (10) of the second rows (R2) are longer than the bristle tufts (10) of the at least one first row (R1), wherein the bristle tufts (10) of the second row (R2) are inclined towards the central longitudinal axis or midplane (M), wherein at least a third row (R3) of bristle tufts (10) is provided outside the second row (R2), wherein the bristle tufts (10) of the at least one third row (R3) stand perpendicularly to the reference plane (EB) of the base body or base plate (6), and wherein the bristle tufts (10) of the second and third rows (R2, R3) are of the same length.

2. Brush head according to Claim 1, **characterized in that** the bristle tufts (10) of the at least one first row (R1) stand perpendicular to the reference plane (EB) of the base body or base plate (6).

3. Brush head according to Claim 1 or 2, **characterized in that** at least one second and one third row (R2, R3) of bristle tufts (10) is provided on each side of the central longitudinal axis or midplane (M).

4. Brush head according to one of the preceding claims, **characterized in that** the angle of inclination (α) of the bristle tufts (10) of the second row (R2) relative to the reference plane of the base body or base plate (6) is in the range between 65° and 85°, particularly between 70° and 75°, and particularly preferably is 73°.

5. Brush head according to any one of the preceding claims, **characterized in that** the bristle tufts (10) of the third row (R3) substantially have the same height above the base body or base plate (6) as the bristle tufts (10) of the second row (R2).

6. Brush head according to any one of the preceding claims, **characterized in that** the free bristle ends of the slanted or inclined bristle tufts (10) are cut in such manner that they lie in a common plane.

7. Brush head according to any one of the preceding claims, **characterized in that** each of the rows (R1, R2, R3) comprises six to eight, preferably seven bristle tufts (10).

8. Brush head according to any one of the preceding claims, **characterized in that** the bristle tufts (10) of the first row (R1) have a length in the range from 3 mm to 5 mm, preferably 4 mm.

9. Brush head according to any one of the preceding claims, **characterized in that** the bristle tufts (10) of the second row (R2) have a length in the range from 6 mm to 10 mm, preferably 7 mm to 9 mm.

10. Brush head according to any one of the preceding claims, **characterized in that** the distance between adjacent rows viewed in the transverse direction (Q) is in the range of 2 mm to 3 mm and preferably is 2.5 mm in each case.

11. Toothbrush having a brush head (2) according to any one of the preceding claims.

## Revendications

1. Tête de brosse pour une brosse à dents sonique ou ultrasonique, pourvue d'un émetteur d'ultrasons (14) et d'une pluralité de touffes de poils (10), qui sont placées sur un corps de base formant un plan de référence (EB) ou sur une plaque de base (6) et qui en service, sont amenées en vibration par l'émetteur d'ultrasons (14), les touffes de poils (10) étant placées en plusieurs rangées (R1 - R3) orientées à la parallèle et en symétrie d'un axe longitudinal médian ou d'un plan médian (M) de la plaque de base (6), dans une direction transversale (Q) à l'axe longitudinal médian ou au plan médian (M) étant prévues au moins une première rangée (R1) et se raccordant sur celle-ci, respectivement au moins une deuxième rangée (R2), dans chaque rangée, les touffes de poils (10) qui s'y trouvent étant de longueur égale, les touffes de poils (10) des deuxièmes rangées (R2) étant plus longues que les touffes de poils (10) de l'au moins une première rangée (R1), les touffes de poils (10) de la deuxième rangée (R2) étant inclinées vers l'axe longitudinal médian ou vers le plan médian (M), à l'extérieur de la deuxième rangée (R2) étant prévue au moins une troisième rangée (R3) de touffes de poils (10), les touffes de poils (10) de l'au moins une troisième rangée (R3) se tenant à la perpendiculaire du plan de référence (EB) du corps de base ou de la plaque de base (6) et les touffes de poils (10) des deuxième et troisième rangées (R2, R3) étant de longueur égale.

2. Tête de brosse selon la revendication 1, **caractérisée en ce que** les touffes de poils (10) de l'au moins une première rangée (R1) se tiennent à la perpendiculaire sur le plan de référence (EB) du corps de base ou de la plaque de base (6).

3. Tête de brosse selon la revendication 1 ou 2, **caractérisée en ce que** de part et d'autre de l'axe longitudinal médian ou du plan médian (M) est prévue respectivement au moins une deuxième et une troisième rangées (R2, R3) de touffes de poils (10) t.

4. Tête de brosse selon l'une quelconque des revendications précédentes, **caractérisée en ce que** l'angle d'inclinaison (α) des touffes de poils (10) de la deuxième rangée (R2) par rapport au plan de référence du corps de base ou de la plaque de base (6) se situe dans une plage comprise entre 65° et 85°, notamment entre 70° et 75°, et de manière particulièrement préférentielle à 73°.

5. Tête de brosse selon l'une quelconque des revendications précédentes, **caractérisée en ce que** les touffes de poils (10) de la troisième rangée (R3) présentent sensiblement la même hauteur au-dessus du corps de base ou de la plaque de base (6) que les touffes de poils (10) de la deuxième rangée (R2).

6. Tête de brosse selon l'une quelconque des revendications précédentes, **caractérisée en ce que** les extrémités libres des poils des touffes de poils (10) se tenant en oblique ou inclinées sont entamées de telle sorte qu'elles se situent dans un plan commun.

7. Tête de brosse selon l'une quelconque des revendications précédentes, **caractérisée en ce que** chacune des rangées (R1, R2, R3) comporte de six à huit, de préférence sept touffes de poils (10).

8. Tête de brosse selon l'une quelconque des revendications précédentes, **caractérisée en ce que** les touffes de poils (10) de la première rangée (R1) présentent une longueur dans la plage de 3 mm à 5 mm, de préférence de 4 mm.

9. Tête de brosse selon l'une quelconque des revendications précédentes, **caractérisée en ce que** les touffes de poils (10) de la deuxième rangée (R2) présentent une longueur dans la plage de 6 mm à 10 mm, de préférence de 7 mm à 9 mm.

10. Tête de brosse selon l'une quelconque des revendications précédentes, **caractérisée en ce que** l'écart entre des rangées voisines, vues dans la direction transversale (Q) se situe respectivement dans la plage de 2 mm à 3 mm et est de préférence de respectivement 2,5 mm.

11. Brosse à dents pourvue d'une tête de brosse (2) selon l'une quelconque des revendications précédentes.
